# FASCICULE DE BREVET EUROPEEN

(11) **EP 1 330 416 B1**
(45) Date de publication et mention de la délivrance du brevet: **07.04.2004**
(21) Numéro de dépôt: 01978546.8
(22) Date de dépôt: 17.10.2001
(51) Int. Cl.: C03B 5/42, C03B 5/03

(54) **FOUR DE FUSION ELECTRIQUE DU VERRE, A ELEMENTS DE PAROIS PIVOTANTS**
ELEKTRISCHER GLASSCHMELZOFEN MIT SCHWENKBAREN WANDELEMENTEN
ELECTRIC GLASS MELTING FURNACE, WITH PIVOTING WALL ELEMENTS

(30) Priorité: 18.10.2000 FR 0013308
(43) Date de publication de la demande: 30.07.2003
(73) Titulaire: SAINT-GOBAIN ISOVER, 92400 Courbevoie (FR)
(72) Inventeur: COTONNEC, Hervé, F-84420 Piolenc (FR); DELAHALLE, Gérard, F-78700 Conflans Sainte-Honorine (FR)
(74) Mandataire: Colombier, Christian
(86) Numéro de dépôt international: PCT/FR2001/003204
(87) Numéro de publication internationale: WO 2002/032819

(56) Documents cités:
- BE-A- 894 795
- GB-A- 850 269
- US-A- 3 045 994

## Description

La présente invention est relative aux techniques de fusion électrique du verre et plus particulièrement celles dans lesquelles la conductivité du verre fondu est utilisée pour développer l'énergie nécessaire pour fondre les matières premières.

Pendant longtemps, les installations de production de verre opérant sur de grandes quantités de matière ont été pourvues de fours de fusion alimentés en combustible fossile, notamment en gaz. C'était en particulier le cas pour les installations de production en continu de grande capacité fournissant par exemple le verre plat ou le verre de bouteillerie. Sur ces grands fours l'énergie électrique, lorsqu'elle était utilisée, l'était essentiellement comme appoint local pour maintenir la température du verre dans les zones les moins chaudes, ou en dehors du four dans son cheminement vers le lieu de transformation ou encore pour développer certains mouvements de convection supposés favoriser l'homogénéisation, l'affinage ou le transport du matériau fondu.

La fusion électrique proprement dite est d'abord apparue sur des petites unités pour lesquelles une grande souplesse dans les conditions d'utilisation semblait nécessaire. Les fluctuations des coûts énergétiques et la maîtrise progressive de certains problèmes d'ordre technologique ont conduit plus récemment au développement d'unités de production importantes dans lesquelles l'ensemble du processus de fusion, à l'exception de la mise en service, se déroule en ayant recours à l'énergie électrique. Ce développement requiert la solution de problèmes technologiques extrêmement délicats.

C'est ainsi que, notamment pour éviter la question de l'oxydation des électrodes à la surface du bain en fusion, il a été proposé de les immerger complètement. C'est la solution retenue, par exemple, dans la demande de brevet français publiée sous le numéro FR-A-2 552 073. Dans ce document, les électrodes sont disposées verticalement dans le bain à partir de la sole du four. Dans d'autres réalisations, on trouve aussi des électrodes passant à travers les parois latérales du four.

Indépendamment des avantages qu'elle procure vis-à-vis des problèmes de corrosion, l'immersion des électrodes permet aussi une alimentation commode et bien uniforme de la surface du bain en composition de matières premières. La constitution d'une couche relativement épaisse de composition à fondre, surnageant sur le bain fondu, est utile en effet pour plusieurs raisons. Elle forme, au contact du bain en fusion, la réserve permanente de matière nécessaire au fonctionnement continu. Elle protège aussi le bain en fusion d'une forte déperdition calorifique par convection au contact de l'atmosphère et surtout par rayonnement.

Si les fours du type décrit dans le document précité trouvent des applications industrielles très importantes, ils ne permettent pas de répondre nécessairement au mieux à toutes les exigences rencontrées dans la pratique. A titre d'exemple il est souhaitable, dans certains cas, et dans le but évident de limiter les coûts d'investissement, de transformer les installations fonctionnant avec des brûleurs en conservant le plus possible des éléments existants et notamment les matériaux réfractaires constituant le bassin. Une telle transformation n'est toujours pas possible lorsqu'il s'agit d'implanter des électrodes dans la sole ou dans les parois latérales du four.

Les fours dont les électrodes sont immergées par la sole ou les parois de cuve offrent des possibilités limitées de réglage des électrodes. S'ils conduisent à des performances tout à fait satisfaisantes pour un certain régime, ils se prêtent moins bien à des modifications fréquentes et/ou substantielles de ce régime de fonctionnement.

C'est pourquoi on leur a parfois préféré des fours dits « à électrodes plongeantes ». Ainsi le brevet français FR 2 599 734 décrit un four de ce type dans lequel les électrodes sont disposées et réparties de façon à optimiser le rendement du four et surtout sa souplesse d'utilisation.

Ce type de four comporte, de façon classique, une sole en matériau réfractaire, quatre parois latérales ou assises, une voûte supérieure, un moyen d'alimentation en composition de verre, une gorge de sortie du verre fondu.

Il peut également comprendre des panneaux latéraux mobiles verticalement, destinés à isoler le bain vis-à-vis de l'atmosphère environnante à certains moments du processus de formation du verre.

L'isolation thermique du bain de verre est en effet un problème majeur dans les fours verriers.

La présente invention propose une solution à la fois nouvelle et originale à ce problème.

Elle permet en effet un isolement sélectif et contrôlé du four, qui est en outre modulable et efficace.

Ces caractéristiques ne se retrouvent nullement dans l'art antérieur qui, au mieux, concerne un système de type « tout ou rien » quant à l'isolation du four. L'expérience a par ailleurs montré que lorsque les panneaux latéraux mobiles verticalement sont fermés, l'isolation du four n'est pas correctement assurée à cause notamment des jeux entre les panneaux.

Avantageusement, l'étanchéité du four est parfaitement préservée selon l'invention.

Ainsi, l'invention a pour objet un four de fusion électrique du verre comprenant une sole en matériau réfractaire, quatre parois latérales ou assises, une voûte supérieure, un moyen d'alimentation en composition de verre, une gorge de sortie du verre fondu.

Conformément à l'invention, il comprend en outre un ensemble d'éléments pivotants autour d'axes horizontaux et disposés en périphérie du four entre l'une au moins des parois latérales et la voûte.

La modularité de l'isolation du four est ainsi réalisée par le fait qu'il existe un ensemble d'éléments pivotants et non pas un seul par côté.

En outre, les éléments de fusion sont des panneaux (plats) juxtaposés dont les épaisseurs sont découpées verticalement de façon à créer une parfaite étanchéité entre deux panneaux jointifs.

Une telle disposition garantit une étanchéité entre chacun des panneaux et donc une étanchéité globale comparable à celle obtenue avec un unique panneau.

Selon une particularité de l'invention, le four comprend en outre un ensemble de câbles, poulies et treuils destinés à faire pivoter individuellement ou par groupe lesdits éléments pivotants.

Ainsi, selon le type d'utilisation choisie, voire le moment du processus de fabrication du verre, un nombre plus ou moins grand d'éléments pivotants pourront être ouverts, ce qui permet de moduler l'isolation thermique du four.

Conformément à une autre particularité de l'invention, le four comprend en outre un mécanisme de verrouillage des éléments pivotants en position ouverte.

En outre, le four selon l'invention peut comprendre un système de déverrouillage des éléments pivotants.

Cet aspect de l'invention assure une parfaite sécurité du fonctionnement des éléments pivotants d'où une maîtrise de l'isolation générale du four.

Selon un aspect intéressant de l'invention, les éléments pivotants sont renforcés mécaniquement par des éléments tels que des tiges implantés dans leur épaisseur. Les tiges sont préférentiellement métalliques.

Conformément à un mode de réalisation de l'invention, les éléments pivotants sont disposés sur au moins trois côtés latéraux du four.

La présente invention peut être utilisée dans un four du type à électrodes plongeantes. Dans ce cas, il peut être prévu de disposer au moins un élément pivotant au regard de chaque électrode plongeante.

En conformité avec une caractéristique de l'invention, le four comprend en outre des capteurs de mesure implantables à l'intérieur du four, sur au moins une paroi latérale, et au moins un élément pivotant est disposé au regard d'au moins un capteur de mesure.

En outre, le four comprend un système destiné à relever simultanément tous les éléments pivotants disposés sur l'un au moins de ses côtés.

Cette possibilité, réservée préférentiellement au côté dit d'enfournement c'est-à-dire par lequel est introduit le distributeur de la composition, assure une rapidité dans l'exécution des mouvements des panneaux, ce qui est très apprécié des utilisateurs.

D'autres caractéristiques, détails, avantages de l'invention apparaîtront mieux à la lecture de la description qui va suivre, faite à titre illustratif et nullement limitatif, en référence aux dessins annexés sur lesquels :
- la figure 1 est un schéma d'ensemble général d'un four de fusion de verre ;
- la figure 2 est une vue partielle et schématique d'un élément pivotant coopérant avec un moyen de relevage ;
- la figure 3 est une vue partielle et schématique d'un autre élément pivotant coopérant avec un moyen de relevage ;
- la figure 4 est une coupe simplifiée horizontale d'une zone d'extrémité au niveau des éléments pivotants ;
- la figure 5 est un détail de la figure 4 ; et
- les figures 6A, 6B et 6C sont des coupes des différentes formes d'éléments pivotants, dans leur épaisseur.

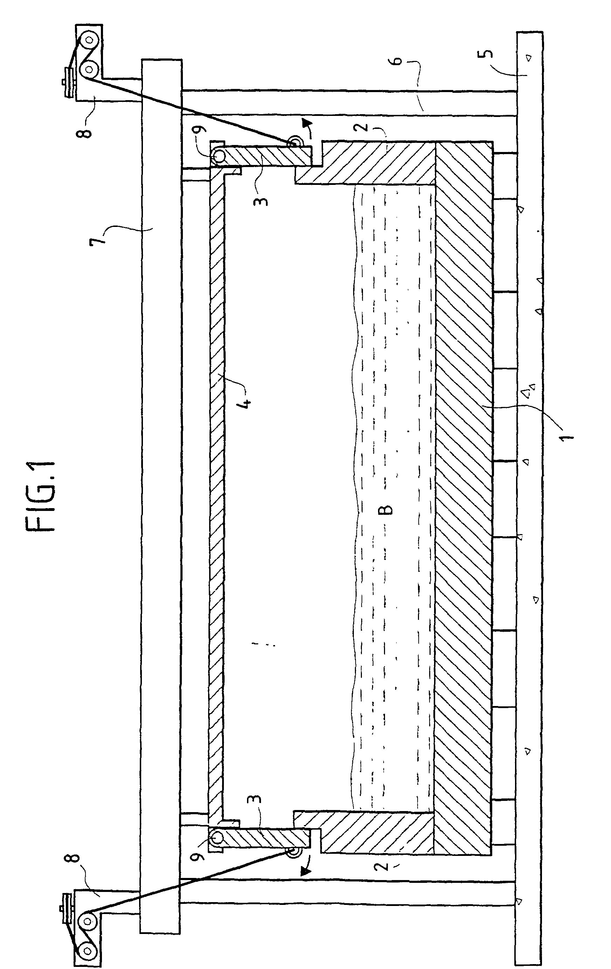

La figure 1 illustre de façon schématique un four de fusion du verre (en coupe transversale) équipé notamment d'éléments pivotants selon l'invention.

Les principaux constituants du four sont référencés comme suit : 1 représente la sole qui est généralement horizontale ou quasi-horizontale ; 2 concerne les parois latérales ou assises en matériaux réfractaires ― La sole 1 et les parois latérales 2 forment classiquement un bassin B (ou cuve) en matériaux réfractaires pour le verre en fusion. Les dimensions du bassin B sont variables.

Les éléments pivotants qui seront décrits en détails ci-après, sont référencés 3 tandis que la voûte horizontale est illustrée par la référence 4.

Une armature est par ailleurs nécessaire ; le four proprement dit repose en effet sur une chape 5 qui supporte en outre des poteaux verticaux 6 destinés à supporter (entre autres) une armature supérieure 7 sur laquelle sont préférentiellement fixés des éléments 8 nécessaires au mouvement des éléments pivotants 3, ainsi que la voûte 4.

Les éléments pivotants 3 sont ainsi disposés en périphérie du four, au-dessus des parois latérales fixes 2. Ils peuvent pivoter autour d'axes horizontaux 9 disposés sensiblement au niveau de la voûte horizontale 4.

Le chauffage du verre dans le bassin B peut être réalisé de différentes façons : on distingue notamment le chauffage électrique par électrodes implantées dans la sole 1, ou bien par des électrodes dites plongeantes comme par exemple décrites dans le brevet FR 2 599 734. Des solution mixtes peuvent être envisagées.

Par ailleurs, des moyens additionnels tels que les brûleurs (non représentés) peuvent être prévus afin d'apporter des calories supplémentaires soit en début de processus soit ponctuellement dans le temps et/ou dans l'espace.

La présente invention s'applique préférentiellement mais non exclusivement aux fours équipés d'électrodes plongeantes. C'est dans ce contexte qu'il présente en effet un grand nombre d'avantages qui apparaîtront mieux à la lecture de la description qui va suivre.

De façon classique, le bain de verre en fusion dans le bassin B est recouvert uniformément de matières premières formant une couche isolante. L'alimentation et la distribution en matières premières peuvent être réalisées par une trémie et/ou un convoyeur qui se déplace au-dessus du bassin B en balayant le plus uniformément possible la surface supérieure du bain de verre en fusion présente dans le bassin B.

Ce moyen d'alimentation doit donc opérer entre la surface supérieure du bain de verre et la surface inférieure de la voûte 4.

Jusqu'à présent on prévoyait soit des ouvertures permanentes à ce niveau, soit éventuellement des moyens coulissants qui dégageaient un des côtés latéraux supérieurs du four : ce dernier mode de réalisation est décrit dans le brevet FR 2 599 734.

Cependant, une ouverture permanente présente l'inconvénient de laisser s'échapper des calories de façon permanente c'est-à-dire en grande quantité d'où un mauvais bilan thermique.

Un ou plusieurs panneaux coulissants tels que prévus dans le brevet précité représente une certaine amélioration au plan thermique mais celle-ci est cependant toute relative puisque le panneau côté enfournement est en réalité presque toujours relevé puisqu'il doit impérativement être en position haute lorsque la machine d'alimentation est en fonctionnement c'est-à-dire la majorité du temps. Seul le régime dit « de veille » permet d'abaisser ce ou ces panneaux.

Par ailleurs, dans le cas de fours à électrodes plongeantes, des échancrures doivent être prévues dans les parois mobiles supérieures afin d'offrir un passage latéral pour les bras-support des électrodes. Ce ou plutôt ces ouvertures sont donc nécessairement permanentes d'où une perte d'énergie non négligeable.

La présente invention permet de pallier notamment à ces inconvénients et offre donc une amélioration sensible au niveau du bilan thermique : elle limite en effet les pertes thermiques au-dessus du bassin B.

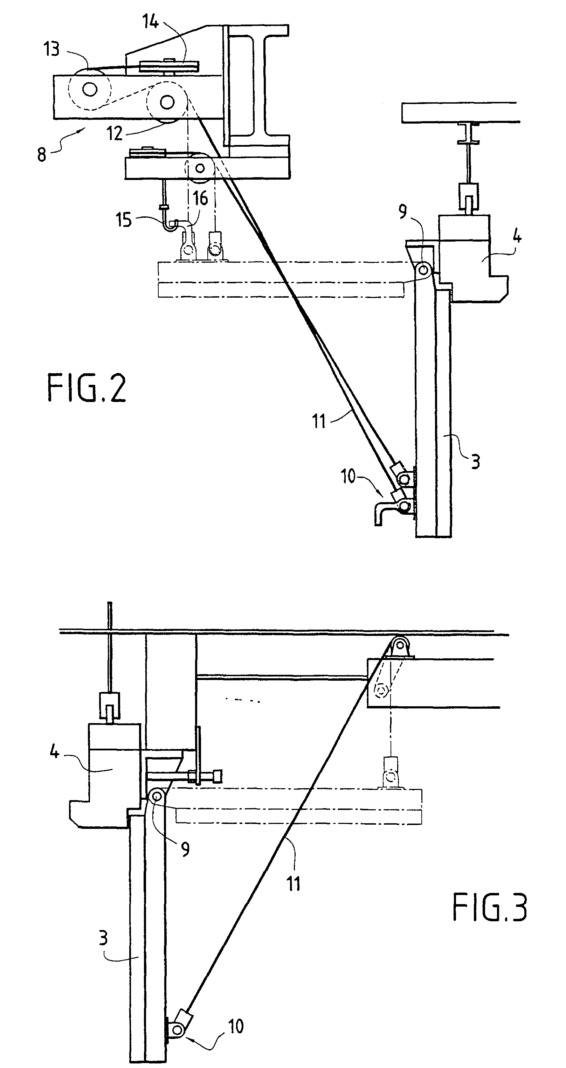

Ainsi la présente invention propose d'équiper le four d'un ensemble de panneaux pivotants 3 disposés en périphérie du four. Un certain nombre de panneaux sont donc disposés sur chacun des côtés du four, tout au moins sur le côté dit d'enfournement, là où la machine d'alimentation en composition pénètre dans le four. Les panneaux 3 peuvent pivoter autour d'un axe horizontal 9 comme illustré plus en détails sur la figure 2 et sur la figure 3.

A l'extrémité opposée de l'axe 9, un élément d'accrochage 10 est prévu sur la surface du panneau extérieure au bassin B. Un câble 11 coopère avec l'élément d'accrochage 10 afin de faire pivoter le panneau 3 autour de l'axe 9. Le câble 11 est actionné par exemple par un ensemble de poulies 12, 13, 14 fixées sur un ou plusieurs supports 8 déjà mentionnés.

Par ailleurs, lorsque les panneaux 3 sont en position horizontale permettant ainsi la communication entre l'intérieur du four et l'environnement extérieur, ils peuvent être fixés dans cette position par des crochets 15 qui coopèrent avec un anneau 16 lié au panneau 3.

Selon un mode de réalisation de l'invention, il existe une commande individuelle pour le mouvement de chaque porte, sur trois côtés du four. Sur le quatrième côté, là où la machine d'alimentation en composition est introduite dans le four, les portes peuvent être déplacées ensemble ou individuellement.

Cet arrangement permet d'une part d'ouvrir et de fermer très rapidement le côté dit d'enfournement, avec une seule personne pour effectuer l'opération.

Par ailleurs si des électrodes plongeantes sont implantées sur le quatrième côté, il est possible de fermer ce côté tout en accédant aux électrodes plongeantes.

En outre sur les trois autres côtés, la modularité de l'ouverture des panneaux 3 permet par exemple d'agir sur un élément tel qu'une électrode située dans le four, sans perturber d'autres éléments disposés dans le four. Dans un four à électrodes plongeantes on prévoit avantageusement de disposer un panneau 3 en face de chaque électrode plongeante, et un élément de relevage individuel pour chacun desdits panneaux 3.

Il est en outre prévu une tringlerie permettant de décrocheter à distance les systèmes de sécurité 15, 16.

Préférentiellement, une tringlerie est dédiée à l'ensemble des panneaux 3 côté enfournement tandis que plusieurs tringleries sont prévues pour décrocheter les différents panneaux 3 disposés respectivement sur les trois autres côtés.

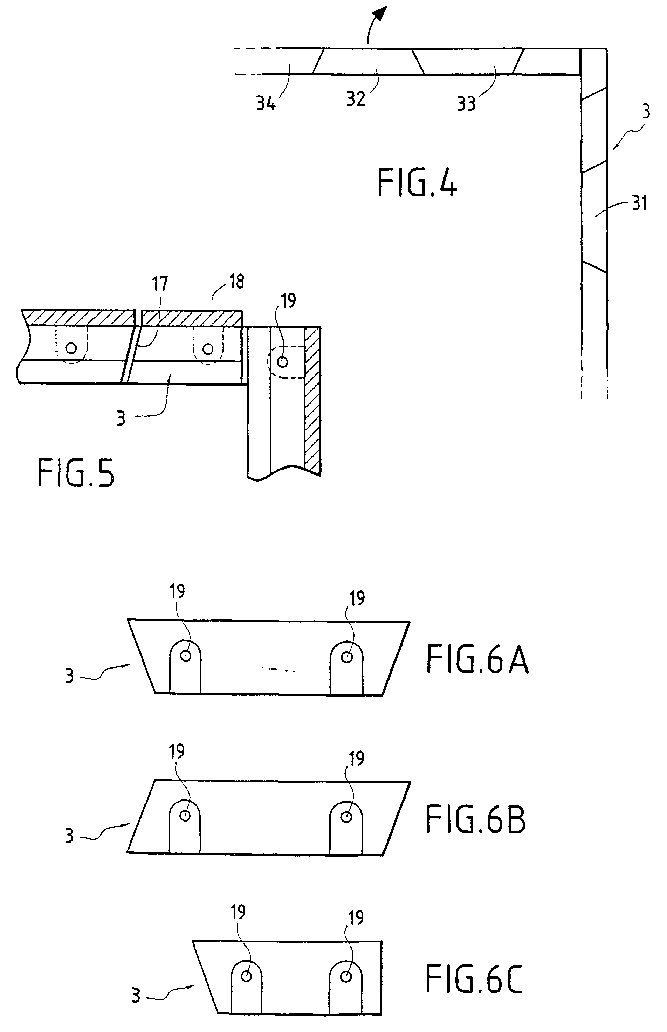

Par ailleurs, comme le montre la figure 4, les panneaux 3 sont découpés en biais dans leur épaisseur. Ceci permet d'améliorer l'étanchéité entre lesdits panneaux ce qui est un avantage important vis-à-vis de l'art antérieur. En outre, ce découpage permet de manoeuvrer de façon privilégiée certains panneaux 3, et/ou certains groupes de panneaux. Par exemple, l'ouverture du panneau 31 peut se faire individuellement : ce sera préférentiellement un panneau disposé en regard d'une électrode. Par contre, l'ouverture du panneau 32 entraînera celle des panneaux voisins 33 et 34.

La figure 5 montre plus en détails l'étanchéité et la juxtaposition des panneaux. Un joint d'étanchéité 17 est préférentiellement prévu entre chaque panneau 3. La surface extérieure des panneaux peut être recouverte d'une plaque 18 constituée d'un matériau très isolant thermiquement.

En outre, l'étanchéité inhérente à l'invention évite un problème récurrent de l'art antérieur ; des chalumeaux (flammes) se développaient fréquemment entre les panneaux non jointifs. Bien entendu, ces flammes détériorent l'intérieur du four, ce qui est très peu apprécié des utilisateurs.

Par ailleurs des éléments de renfort 19 peuvent être intégrés dans l'épaisseur des panneaux 3. Les figures 6A, 6B et 6C montrent les emplacements possibles des éléments 19, dans trois formes de réalisation de panneaux 3.

La juxtaposition particulière des panneaux 3 permet de moduler l'ouverture de la partie supérieure du four en fonction de l'emplacement des électrodes mais aussi d'autres éléments tels que des capteurs ou autres moyens de mesure. On pourrait ainsi prévoir des ouvertures au droit de capteurs implantés dans le four, qui renseigneraient en permanence sur l'état de ses parois intérieures. Lorsque l'un des capteurs est jugé défectueux il est alors possible d'ouvrir le panneau le plus proche et d'extraire le (ou les) capteur(s).

Habituellement les capteurs sont introduits ponctuellement dans le four pour réaliser par exemple des mesures d'usure. Vu la configuration des éléments pivotants selon l'invention, il est possible de choisir un emplacement pour l'implantation du ou des capteurs puis de relever la ou les portes située dans la zone choisie afin d'y implanter un capteur.

Le remplacement et/ou la réparation d'éléments internes au four deviennent ainsi des interventions « faciles », rapides et qui ne perturbent pas le fonctionnement général du four.

Bien entendu, la simplicité de construction de l'ensemble des panneaux est un avantage non négligeable de l'invention. Les panneaux peuvent être manoeuvrés non seulement facilement mais de façon sûre et fiable.

Le matériau choisi pour les panneaux 3 est un isolant thermique, qui résiste à des températures de l'ordre de 1500°C (pendant les arrêts de four). Il est relativement léger.

A titre illustratif les panneaux 3 peuvent être réalisés en sillimanite ; leur épaisseur peut être de l'ordre de 100 mm ; leur hauteur aux environs de 1100, 1200 mm voire moitié moins ; et leur largeur entre 300 et 800 mm voire plus.

Un autre aspect intéressant de l'invention concerne les envols de poussière (créés dans le four) : la présente structure permet de les limiter de façon très efficace puisque notamment l'étanchéité entre panneaux est très bien assurée.

Les cheminées prévues normalement pour l'aspiration des poussières sont ainsi moins sollicitées de sorte que l'on perd moins de matières premières. Par ailleurs le four est, la plupart du temps, fermé sur trois de ses côtés supérieurs. En cas de problème, il est donc très facile selon l'invention de fermer le quatrième côté, grâce à l'ensemble des moyens décrits ci-dessus.

## Revendications

1. Four de fusion électrique du verre comprenant une sole (1) en matériaux réfractaires, quatre parois latérales (2) ou assises, une voûte supérieure (4), un moyen d'alimentation en composition de verre, une gorge de sortie du verre fondu, **caractérisé en ce qu'**il comprend en outre un ensemble d'éléments pivotants (3) autour d'axes horizontaux (9) et disposés en périphérie du four entre l'une au moins des parois latérales (2) et la voûte (4).

2. Four de fusion selon la revendication 1, **caractérisé en ce que** les éléments pivotants (3) sont des panneaux (plats) juxtaposés dont les épaisseurs sont découpées verticalement de façon à créer une étanchéité entre deux panneaux jointifs (3).

3. Four de fusion selon l'une quelconque des revendications précédentes, **caractérisé en ce qu'**il comprend en outre un ensemble de câbles (11), poulies (12-14), treuils destinés à faire pivoter individuellement ou par groupe lesdits éléments pivotants (3).

4. Four de fusion selon l'une quelconque des revendications précédentes, **caractérisé en ce qu'**il comprend en outre un mécanisme de verrouillage (15, 16) des éléments pivotants (3) en position ouverte.

5. Four de fusion selon la revendication 4, **caractérisé en ce qu'**il comprend en outre un système de déverrouillage des éléments pivotants (3).

6. Four de fusion selon l'une quelconque des revendications précédentes, **caractérisé en ce que** les éléments pivotants (3) sont renforcés mécaniquement par des éléments (19) tels que des tiges implantées dans leur épaisseur.

7. Four de fusion selon l'une quelconque des revendications précédentes, **caractérisé en ce que** les éléments pivotants (3) sont disposés sur au moins trois côtés latéraux du four.

8. Four de fusion selon l'une quelconque des revendications précédentes, comprenant des électrodes dites plongeantes, **caractérisé en ce que** au moins un élément pivotant (3) est disposé au regard de chaque électrode plongeante.

9. Four selon l'une quelconque des revendications précédentes, **caractérisé en ce qu'**il comprend en outre des capteurs de mesure implantables à l'intérieur du four, sur au moins une paroi latérale (2) et **en ce que** au moins un élément pivotant (3) est disposé au regard d'au moins un capteur de mesure.

10. Four selon l'une quelconque des revendications précédentes, **caractérisé en ce qu'**il comprend en outre un système destiné à relever simultanément tous les éléments pivotants (3) disposés sur l'un au moins des côtés du four.

## Claims

1. Electrical melting furnace for glass, comprising a hearth (1) of refractory materials, four side or bottom walls (2), an upper roof (4), a means for supplying with glass compound, an outlet channel for the molten glass, **characterised in that** it further comprises an assembly of elements (3) which pivot about horizontal axes (9) and which are arranged at the periphery of the furnace between at least one of the side walls (2) and the roof (4).

2. Melting furnace according to claim 1, **characterised in that** the pivoting elements (3) are juxtaposed (flat) panels which are vertically cut over the thickness thereof in order to create a seal between two contiguous panels (3).

3. Melting furnace according to either of the preceding claims, **characterised in that** it further comprises an assembly of cables (11), pulleys (12-14) and winches which are intended to pivot the pivoting elements (3) individually or in groups.

4. Melting furnace according to any one of the preceding claims, **characterised in that** it further comprises a mechanism (15, 16) for locking the pivoting elements (3) in the open position.

5. Melting furnace according to claim 4, **characterised in that** it further comprises a system for unlocking the pivoting elements (3).

6. Melting furnace according to any one of the preceding claims, **characterised in that** the pivoting elements (3) are mechanically reinforced by elements (19) such as rods which are embedded over the thickness thereof.

7. Melting furnace according to any one of the preceding claims, **characterised in that** the pivoting elements (3) are arranged on at least three lateral sides of the furnace.

8. Melting furnace according to any one of the preceding claims, comprising so-called plunging electrodes, **characterised in that** at least one pivoting element (3) is arranged facing each plunging electrode.

9. Furnace according to any one of the preceding claims, **characterised in that** it further comprises measurement sensors which can be embedded inside the furnace, on at least one side wall (2), and **in that** at least one pivoting element (3) is arranged facing at least one measurement sensor.

10. Furnace according to any one of the preceding claims, **characterised in that** it further comprises a system which is intended to lift simultaneously all of the pivoting elements (3) which are arranged on at least one of the sides of the furnace.

## Patentansprüche

1. Elektrischer Glasschmelzofen mit einer Sohle (1) aus feuerfesten Materialien, vier Seitenwänden (2) bzw. Fundamentwänden, einem oberen Gewölbe (4), einer Einrichtung zur Versorgung mit Glaszusammensetzung, einer Rinne für den Austritt von Glasschmelze, **dadurch gekennzeichnet, daß** er des weiteren eine Gruppe von um horizontale Achsen (9) verschwenkbaren Elementen (3) aufweist, die am Umfang des Ofens zwischen mindestens einer der Seitenwände (2) und dem Gewölbe (4) angeordnet sind.

2. Schmelzofen nach Anspruch 1, **dadurch gekennzeichnet, daß** die verschwenkbaren Elemente (3) nebeneinanderliegende (flache) Platten sind, deren Dicke in Vertikalrichtung so geschnitten ist, daß zwischen zwei aneinandergrenzenden Platten (3) eine Abdichtung erzeugt wird.

3. Schmelzofen nach einem der vorhergehenden Ansprüche, **dadurch gekennzeichnet, daß** er des weiteren eine Konstruktion mit Kabeln (11), Rollen (12-14) und . Winden aufweist, die dazu bestimmt sind, die verschwenkbaren Elemente (3) einzeln oder gruppenweise zu verschwenken.

4. Schmelzofen nach einem der vorhergehenden Ansprüche, **dadurch gekennzeichnet, daß** er des weiteren einen Mechanismus (15, 16) zum Verriegeln der verschwenkbaren Elemente (3) in der offenen Position aufweist.

5. Schmelzofen nach Anspruch 4, **dadurch gekennzeichnet, daß** er des weiteren ein System zum Entriegeln der verschwenkbaren Elemente (3) aufweist.

6. Schmelzofen nach einem der vorhergehenden Ansprüche, **dadurch gekennzeichnet, daß** die verschwenkbaren Elemente (3) durch Elemente (19) wie etwa in deren Dickerichtung eingesetzte Stangen mechanisch verstärkt sind.

7. Schmelzofen nach einem der vorhergehenden Ansprüche, **dadurch gekennzeichnet, daß** die verschwenkbaren Elemente (3) auf mindestens drei seitlichen Seiten des Ofens angeordnet sind.

8. Schmelzofen nach einem der vorhergehenden Ansprüche, welcher sogenannte Tauchelektroden aufweist, **dadurch gekennzeichnet, daß** gegenüber von jeder Tauchelektrode mindestens ein verschwenkbares Element (3) angeordnet ist.

9. Ofen nach einem der vorhergehenden Ansprüche, **dadurch gekennzeichnet, daß** er des weiteren an mindestens einer Seitenwand (2) Meßfühler aufweist, die für die Verwendung im Inneren des Ofens vorgesehen sind, und daß gegenüber von mindestens einem Meßfühler mindestens ein verschwenkbares Element (3) angeordnet ist.

10. Ofen nach einem der vorhergehenden Ansprüche, **dadurch gekennzeichnet, daß** er des weiteren ein System zum gleichzeitigen Anheben mindestens aller auf einer Seite des Ofens angeordneten, verschwenkbaren Elemente (3) aufweist.
